# EUROPEAN PATENT SPECIFICATION

(11) **EP 2 799 609 B1**
(45) Date of publication and mention of the grant of the patent: **18.05.2016**
(21) Application number: 12862331.1
(22) Date of filing: 01.10.2012
(51) Int. Cl.: D06F 33/02, D06F 39/08, G06F 13/00, G05B 23/02, H04L 12/28

(54) **WASHING MACHINE AND WASHING MACHINE SYSTEM**
WASCHMASCHINE UND WASCHMASCHINENSYSTEM
MACHINE A LAVER ET SON SYSTEME

(30) Priority: 27.12.2011 JP 2011285793
(43) Date of publication of application: 05.11.2014
(73) Proprietor: Panasonic Corporation, Kadoma-shi, Osaka 571-8501 (JP)
(72) Inventor: HAGIWARA, Hisashi, Chuo-ku, Osaka 540-6207 (JP); KONDOU, Shinji, Chuo-ku, Osaka 540-6207 (JP)
(74) Representative: Schwabe - Sandmair - Marx
(86) International application number: PCT/JP2012/006276
(87) International publication number: WO 2013/099066

(56) References cited:
- EP-A1- 1 744 248
- JP-A- H08 309 088
- JP-A- H11 114 274
- JP-A- 2001 129 300
- US-A1- 2002 130 784

## Description

### Technical Field

The present invention relates to a washing machine that is configured to be able to perform operation control in accordance with the settings made by a network terminal such as a mobile phone connected to a communication network. The present invention also relates to a washing machine system that allows the washing machine to cooperate with the network terminal via the communication network.

### Background Art

There is a conventionally known technology that connects household appliances such as a washing machine to a communication network, and makes it possible to confirm the operation conditions of the household appliances using network terminals such as a personal computer and a mobile phone connected to the network.

For example, Patent Document 1 discloses an example of a system that makes settings for the operation of a washing machine by a network terminal. The washing machine has the function of controlling and monitoring a washing operation, and also is connected to an information board (corresponding to a home network). The information board has the functions of exchanging information with the outside via the network and to control and monitor the washing machine externally. The washing machine has various types of control and setting functions such as default control, timer control, and timer setting, and also has the function of communicating with a mobile phone via the information board.

For example, let us assume that a control request is transmitted from a mobile phone to the washing machine in order to change the wash time set by a timer, so as to start washing immediately. In this case, the information board transmits a control signal to the washing machine to start washing, and the washing machine starts a washing operation as a result of a series of information transmission. If the state of the washing machine is changed by the control results or the like, information about a change in the state of the washing sequences such as washing, rinsing, and spinning is transmitted from the washing machine to the mobile phone via the information board or the like as state change information.

On the other hand, a washing machine equipped with a water supply pump has been conventionally known. In the washing machine equipped with a water supply pump, a city water supply channel is provided with a water supply valve, and a pump water supply channel is provided with the water supply pump. The open and close of the water supply valve and the operation of the water supply pump are controlled selectively so that water is supplied to the tub. In general, the pump water supply channel is used to effectively utilize the water left in the bathtub for washing. However, the utilization of bathwater by the water supply pump has the following problems.

Even if all the bathwater has been pumped out of the bathtub while the water supply pump is yet operating, users cannot be aware of it unless they are present by the side of the washing machine. Consequently, in some cases, the washing machine remains stopped. For another example, usually it is the user's intention to wash laundry with clean water in the final rinsing process. Accordingly, if city water is suspended during the operation, the washing machine may remain stopped. Moreover, if the water level of the bath is higher than that of the washing machine, the bathwater will be supplied due to a so called siphon phenomenon, despite the fact that the water supply pump has stopped operating.

To solve the above problems, e.g., Patent Document 2 discloses performing the following control. When a water level detection means does not detect any change in the water level for a certain period of time during the operation of one of the water supply pump and the water supply valve, the other of the water supply valve and the water supply pump is operated automatically. Alternatively, when the water level detection means does not detect any change in the water level for a certain period of time during the operation of one of the water supply pump and the water supply valve, or when the water level detection means does not detect any change in the water level for a certain period of time even after the other of the water supply valve and the water supply pump is operated, an operation display means notifies users of the anomaly. Alternatively, when the water level detection means detects an increase in the water level even though both the water supply valve and the water supply pump are not operated, the operation display means notifies users of the anomaly.

According to the control disclosed in Patent Document 2, when the water supply is not detected because of some faults or troubles at the time of operating the water supply pump, the water supply valve is operated immediately, thereby preventing the operation of the washing machine from being stopped. Moreover, when no water is supplied even after one of the water supply pump and the water supply valve is operated automatically to deal with the fault or trouble of the other, the operation of the washing machine is stopped, and the washing machine can notify users of the anomaly with a buzzer, an indicator lamp, etc. Also, when water is supplied by the siphon phenomenon even though both the water supply valve and the water supply pump are not operated, the operation of the washing machine is stopped, and the washing machine can notify users of the anomaly with a buzzer, an indicator lamp, etc.
A washing machine with the features of the preamble of claim 1 is known from EP1744248 A1.

### Prior Art Documents

### Patent Documents

Patent Document 1: JP 2004-350731A
Patent Document 2: JP H6(1994)-218184A

### Disclosure of Invention

### Problem to be Solved by the Invention

In the washing machine disclosed in Patent Document 1, when there is a change in the operation condition of the washing machine, the state change information is transmitted to the mobile phone. However, even if the operation condition causes a failure, the washing machine does not transmit any particular communication to deal with the failure. In such a case, the washing machine performs in an uniform control in accordance with the contents that have been programmed into a microcomputer previously based on the assumption of the contents of operation by users. The programmed operations depend on the options that will give average satisfaction to everyone, and may not be the operations that fully satisfy all the individual users.

The washing machine disclosed in Patent Document 2 similarly deals with a failure that occurs in the water supply. That is, the washing machine performs the uniform control in accordance with the contents that have been programmed into a microcomputer previously based on the assumption of the contents of operation by users. With respect to the function of stopping the operation and notifying users of the anomaly with a buzzer or an indicator lamp, this function can be modified so that the anomaly notification is send to the mobile phone or the like via the network. However, it is highly probable that the anomaly notification through the network terminal will not be noticed immediately. In such a case, the washing machine has to continue to stop and wait for settings from the mobile phone or the like.

In view of the above problems, it is an object of the present invention to provide a washing machine that is configured to notify a network terminal of the occurrence of a failure in the operation condition, to allow the network terminal to make settings for a corrective action, and also to avoid continuing the operation control just as it is when the failure is detected, if not receiving an instruction from the network terminal.

### Means for Solving Problem

To solve the above problems, a washing machine of the present invention includes: a washing function unit that performs washing or drying of laundry; a detection unit that includes various sensors for detecting an operation condition of the washing function unit; a communication control unit that communicates with a network terminal via a communication network, wherein the network terminal has a transmitting and receiving function and is connected to the communication network; and an operation control unit that controls an operation of the washing function unit to perform washing or drying in accordance with an operation control program, the washing machine being configured to be capable of setting an operation control action performed by the operation control unit through communication from the network terminal. When detecting an occurrence of a failure in the operation condition of the washing function unit based on a detection signal from the detection unit during control of the operation, the operation control unit notifies the network terminal of the failure, and then waits for a communication for instructing a corrective action for failure from the network terminal, and when a predetermined time has elapsed from start of waiting without receiving a communication for instructing the corrective action from the network terminal, the operation control unit controls the operation to continue an action based on contents that are preset in the operation control program.

### Effects of the Invention

According to the washing machine having the above configuration, when a failure occurs during the operation of the washing machine, users can be notified immediately of the contents of the failure through the network terminal, and make the most satisfactory settings. Moreover, even if the users are not aware of the notification or cannot cope with the failure because of a location away from the washing machine main unit, the washing machine continues a predetermined operation, and thus can avoid inconvenience due to long time waiting for instruction from the network terminal.

### Brief Description of Drawings

[FIG.1] FIG. 1 is a block diagram showing a configuration of a washing machine system of Embodiment 1.
[FIG. 2] FIG. 2 is a flow chart showing a failure coping process of a washing machine that constitutes the washing machine system.
[FIG. 3] FIG. 3 is a flow chart showing a specific example of the failure coping process of the washing machine.
[FIG. 4] FIG. 4 is a block diagram showing a configuration of a washing machine system of Embodiment 2.
[FIG. 5] FIG. 5 is a block diagram showing a configuration of a washing machine system of Embodiment 3.

### Description of the Invention

The washing machine and the washing machine system of the present invention may be configured to have the following aspects on the basis of the above configuration.

In the washing machine with the above configuration, the operation control unit may be configured to control the operation to continue an action at the time of detecting the occurrence of the failure while the operation control unit waits for a communication from the network terminal.

The operation control unit may be configured to control the operation to be stopped while the operation control unit waits for a communication from the network terminal.

It is possible to configure such that when the operation control unit controls the operation to continue an action based on the contents that are preset in the operation control program, the operation control unit notifies the network terminal of the contents of the control.

Moreover, it is possible to configure such that water for washing can be selected from city water supply through a water supply valve or bathwater supply from a water supply pump, and when detecting a failure in the bathwater supply during control of the operation including the bathwater supply, the operation control unit notifies the network terminal of the failure, and then waits for a communication for instructing the corrective action from the network terminal, and when a predetermined time has elapsed from start of waiting without receiving a communication for instructing the corrective action from the network terminal, the operation control unit controls the operation to be resumed after switching the water supply to city water.

A washing machine system may be configured to includes the washing machine having any one of the above configurations, connected to a communication network, and a network terminal that is connected to the communication network and can communicate with the washing machine via the communication network.

In the washing machine system, the communication network may be a home wireless LAN, and the network terminal is a wireless personal digital assistant.

Moreover, the communication network may be configured by the Internet and a home network connected to the Internet, the washing machine is connected to the home network, and the network terminal is a mobile phone or a personal digital assistant connected to the home network via the Internet.

Moreover, the communication network may be configured by the Internet, the communication control unit of the washing machine is connected to the Internet via a communication interface, and the network terminal is a mobile phone or a personal digital assistant connected to the washing machine via the Internet and the communication interface.

Hereinafter, embodiments of the present invention will be described in more detail with reference to the drawings.

### (Embodiment 1)

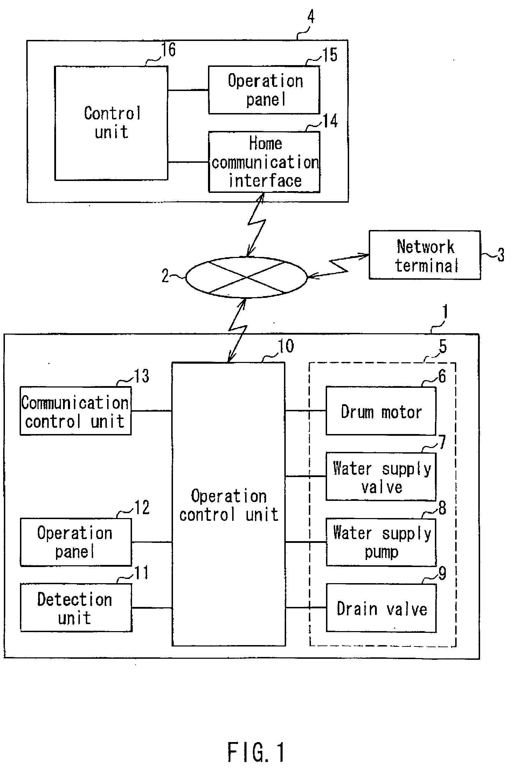

A washing machine and a washing machine system of Embodiment 1 will be described with reference to FIG. 1. FIG. 1 is a block diagram showing the whole configuration of the washing machine system. This washing machine system is configured by linking a washing machine 1 with a network terminal 3 via a home network 2 as an example of a communication network. The home network 2 is constructed from a home server 4.

The washing machine 1 includes, as a general washing function unit 5, a drum motor 6, a water supply valve 7, a water supply pump 8, a drain valve 9, etc. (the other elements are omitted from the drawings). The operation of the washing function unit 5 is controlled by an operation control unit 10. The operation control unit 10 controls the washing function unit 5 to wash or dry laundry in accordance with an operation control program. The washing machine 1 further includes a detection unit 11, an operation panel 12, and a communication control unit 13.

The detection unit 11 includes various sensors such as a water level sensor and a rotation sensor, and the operation control unit 10 can detect an operation condition of the washing function unit 5 based on an output signal from the detection unit 11. The operation panel 12 allows users to input settings such as the washing and drying conditions and the timer control conditions, and also provides the function of displaying a variety of information about the conditions that have been set, the state of the washing machine, or the like. The communication control unit 13 provides the function of communicating with the network terminal 3 via the home network 2.

Although the home network 2 may be connected to the household appliances other than the washing machine 1, for the sake of simplification, only the washing machine 1 is shown in the drawings. The home server 4 includes a home communication interface 14 for constructing the home network 2, an operation panel 15, and a control unit 16 for controlling the operations of the home communication interface 14 and the operation panel 15. The home server 4 is configured by a personal computer (PC), and the operation panel 15 includes a display panel having a liquid crystal panel for display and an input operation unit. The operation panel 15 allows users to set the operation of the home server 4 and to set the operations of the household appliances connected to the home network 2.

The home network 2 can be, e.g., home wireless LAN such as Bluetooth. Alternatively, the home network 2 may be an infrared wireless communication system or a wire communication system. The network terminal 3 may be any devices that have transmitting and receiving function and are connected to the communication network. Examples of the network terminal 3 include a personal computer (PC), a personal digital assistant (PDA), and a mobile phone.

The home server 4 has the function of setting and monitoring the operation control of the washing machine 1 using the operation panel 15, and also can exchange information with the network terminal 3 via the home network 2. Thus, the home server 4 can provide the network terminal 3 with the function of setting and monitoring the operation control of the washing machine 1.

However, it is possible to configure such that only the washing machine 1 has the function of setting and monitoring the operation control, while the home server 4 has solely the function of enabling communication between the washing machine 1 and the network terminal 3. In such a case, the operation control unit 10 is configured to be able to control the operation action in accordance with instructions from the network terminal 3 via communication between the network terminal 3 and the communication control unit 13.

As described above, the operation panel 12 of the washing machine 1 directly provides the functions as a setting operation unit that allows users to input settings such as the washing and drying conditions and the timer control conditions. However, also the network terminal 3 or the operation panel 15 of the home server 4 may have the function as the setting operation unit.

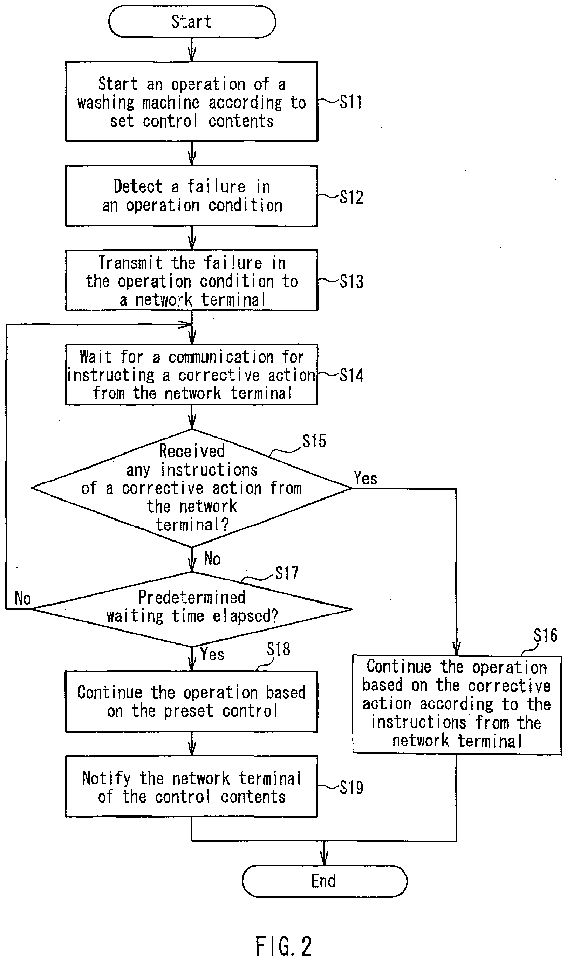

Next, a process to cope with a failure (i.e., a failure coping process) of a washing machine having the above configuration will be described as the feature of this embodiment. FIG. 2 is a flow chart showing the failure coping process of the washing machine of this embodiment. Specifically, FIG. 2 shows the action to cope with a predetermined failure that is detected during the normal washing operation of the washing machine.

The action in FIG. 2 starts with a user's operation to set an operation action. First, in a step S11, the operation control unit 10 starts the operation of the washing machine 1 in accordance with the control contents of the default corresponding to the set operation action. When the operation control unit 10 detects the occurrence of a failure in the operation condition of the washing function unit 5 based on a detection signal from the detection unit 11 during operation control (step S12), the operation control unit 10 transmits the failure to the network terminal 3 (step S13).

Subsequently, the operation control unit 10 waits for a communication for instructing a corrective action for the failure from the network terminal 3 (step S14). In this waiting state, the operation action may be set either to remain as it is when the failure is detected or to be stopped. When receiving a communication for instructing the corrective action from the network terminal 3 (step S15, Yes), the operation control unit 10 continues (or resumes) the operation control based on the control settings in accordance with the instructions of the corrective action from the network terminal 3 (step S16), and then finishes the failure coping process.

If not receiving a communication for instructing the corrective action from the network terminal 3 (step S15, No), the operation control unit 10 maintains the waiting state (step S14) until a predetermined time has elapsed (step S17, No). When the predetermined time has elapsed from the start of waiting without receiving a communication for instructing the corrective action from the network terminal 3 (step S17, Yes), the operation control unit 10 controls the operation to continue (or resume) based on the contents that are preset in the operation control program (step S18). Then, the operation control unit 10 notifies the network terminal 3 of the contents of the control settings when controlled the operation to continue (or resume) (step S19), and then finishes the failure coping process.

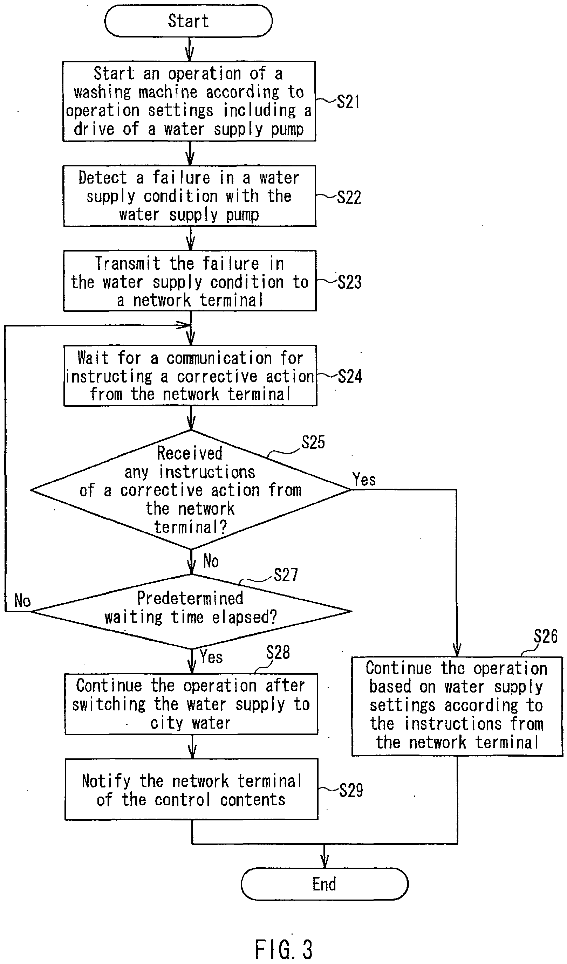

FIG. 2 shows the settings for the operation in a general form that is common to a large number of operation controls. A more specific example of the operation will be described with reference to FIG. 3. The operation in FIG. 3 relates to a washing machine in which water for washing can be selected from the supply of city water from a water supply valve or the supply of bathwater from a water supply pump. In this example, the washing machine is set to the operation using the water supply pump. FIG. 3 is a flow chart showing a failure coping process in this embodiment. Specifically, FIG. 3 shows a process to cope with a predetermined failure in a water supply condition that is detected during the normal washing operation of the washing machine.

First, in a step S21, the operation control unit 10 stars the operation of the washing machine 1 in accordance with a default control content corresponding to the operation action including a drive of the water supply pump. When the operation control unit 10 detects a failure in the supply of bathwater with the water supply pump based on a detection signal from the detection unit 11 during operation control (step S22), the operation control unit 10 transmits the failure in the water supply condition to the network terminal 3 (step S23).

Subsequently, the operation control unit 10 waits for a communication for instructing a corrective action for the failure from the network terminal 3 (step S24). Similarly to FIG. 2, in this waiting state, the operation action may be set either to remain as it is when the failure is detected or to be stopped. When receiving a communication for instructing a corrective action for the failure from the network terminal 3 (step S25, Yes), the operation control unit 10 continues (or resumes) the operation control based on the control settings for the water supply in accordance with the instructions of the corrective action from the network terminal 3 (step S26), and then finishes the failure coping process.

If not receiving a communication for instructing the corrective action from the network terminal 3 (step S25, No), the operation control unit 10 maintains the waiting state (step S24) until a predetermined time has elapsed (step S27, No). When the predetermined time has elapsed from the start of waiting without receiving a communication for instructing the corrective action from the network terminal 3 (step S27, Yes), the operation control unit 10 controls the operation to continue (or resume) after switching the water supply from bathwater to city water (step S28). Then, the operation control unit 10 notifies the network terminal 3 of the contents of the water supply settings when controlled the operation to continue (or resume), i.e., the switching of the water supply to city water (step S29), and then finishes the failure coping process.

As described above, the features of the washing machine of this embodiment are as follows. First, when the occurrence of a failure in the operation condition is detected, the washing machine notifies the network terminal 3 of this failure, and then waits for a communication for instructing a corrective action for the failure from the network terminal 3. Second, when a predetermined time has elapsed from the start of waiting without receiving a communication for instructing the corrective action from the network terminal 3, the washing machine controls the operation to continue based on the contents that are preset in the operation control program.

With these features, since the washing machine notifies the network terminal 3 of the occurrence of a failure, users can make the most satisfactory settings according to their preferences or circumstances. Therefore, it is possible to resolve the discontent of users with a conventional washing machine that deals with the occurrence of a failure by performing the preset control regardless of the users' intentions. Moreover, when not receiving an instruction from the terminal, the washing machine of this embodiment continues the operation based on the preset control, and thus can avoid inconvenience due to long time waiting for instructions from the network terminal 3.

### (Embodiment 2)

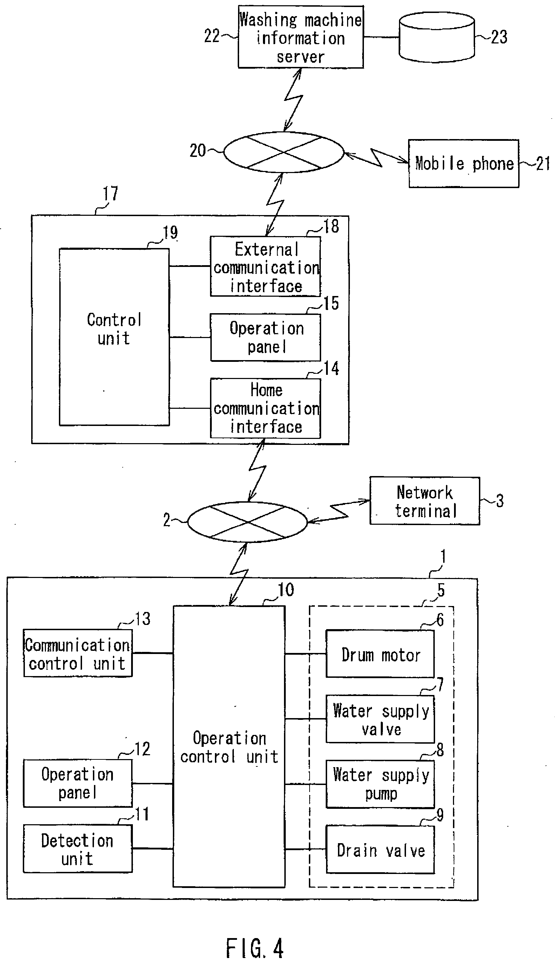

A configuration of a washing machine system of Embodiment 2 will be described with reference to FIG. 4. FIG. 4 is a block diagram showing the whole configuration of the washing machine system of this embodiment. The same elements as those of the washing machine system in FIG. 1 are denoted by the same reference numerals, and the explanation will not be repeated. In addition to the elements of the system of Embodiment 1 shown in FIG. 1, this system uses elements that enable communication via the Internet as an external communication network.

A home server 17 is the same as the home server 4 of Embodiment 1 in that it includes the home communication interface 14 for constructing the home network 2. The home server 17 further includes an external communication interface 18, and accordingly a control unit 19 is configured to perform not only the operations as described in Embodiment 1, but also an operation to make a connection with the Internet 20.

Moreover, in addition to the network terminal 3 that is connected to the home network 2 in Embodiment 1, the system uses a mobile phone 21 that can be connected to the Internet 20. In this case, the system may use the mobile phone 21 alone, without requiring the network terminal 3. It should be noted that the mobile phone 21 actually is connected to the Internet 20 via a mobile phone network, while it is not shown in FIG. 4. A personal digital assistant capable of being connected to the Internet 20 may be used instead of the mobile phone 21.

Further, in this system, a washing machine information server 22 is connected via the Internet 20. The washing machine information server 22 is a means for providing external data and includes a database 23 that stores washing machine information including, e.g., the washing or drying sequence operation and the operation control data. The information stored in the washing machine information server 22 (database 23) is transmitted to the home server 17 via the Internet 20 by operating the home server 17. The washing machine information such as the sequence operation that has been retrieved from the washing machine information server 22 by the home server 17 is transferred to the washing machine 1 via the home network 2 and then stored in the washing machine 1.

By downloading a new washing method in terms of the condition of clothes or a washing method for clothes made of new materials from the washing machine information server 22, a series of operations (washing, rinsing, spinning, and drying) of the washing machine can be controlled by the downloaded operation control program or the like. The data accumulated in the database 23 is always updated to the latest version and stored. Therefore, the function of the washing machine 1 can be updated easily to the latest state by downloading the information from the washing machine information server 22.

The home server 17 can monitor the current state of the washing machine 1 and display it on a display panel provided on the operation panel 15. For example, when there is a change in the state of the washing machine 1 (such as the start or end of the operation course of the washing machine), the washing machine 1 notifies the home server 17 of the changed state, and the home server 17 displays the changed state on the display panel With the above configuration, not only the state can be displayed, but also a remote control of the washing machine 1 can be performed. That is, operation instructions can be provided from the home server 17 to the washing machine 1, and also the washing machine 1 can be operated from the mobile phone 21 or the like via the home server 17.

In the washing machine system having the above configuration, the failure coping process is basically the same as the process represented by the flow chart in FIG. 2 or 3. This embodiment differs from Embodiment 1 in that the communication with the network terminal also can be performed with the mobile phone 21 via the Internet 20.

Therefore, in the washing machine of this embodiment, when the occurrence of a failure in the operation condition is detected, the washing machine notifies the mobile phone 21 (or the network terminal 3) of this failure, and then waits for a communication for instructing a corrective action from the mobile phone 21. When not receiving a communication for instructing a corrective action from the mobile phone 21 until a predetermined time has elapsed from the start of waiting, the washing machine controls the operation to continue based on the contents that are preset in the operation control program.

Thus, similarly to Embodiment 1, users can make the most satisfactory settings according to their preferences or circumstances. Moreover, when not receiving an instruction from the terminal, the washing machine of this embodiment can avoid inconvenience due to long time waiting for instructions from the mobile phone 21.

### (Embodiment 3)

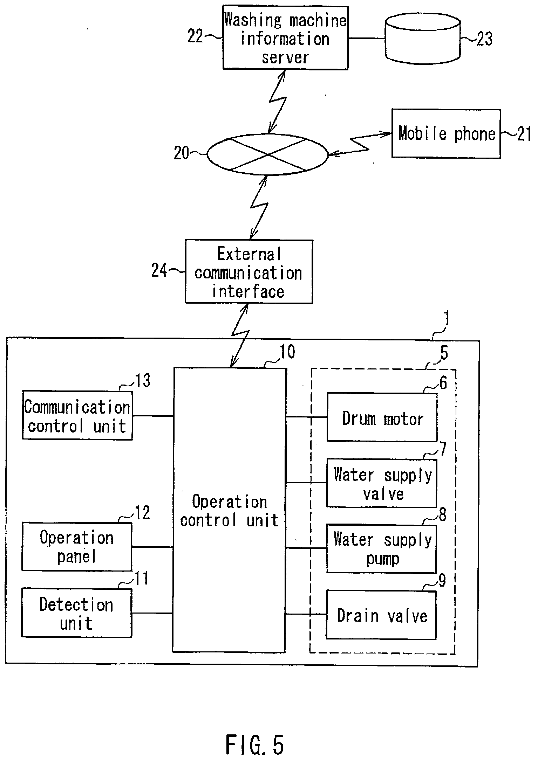

A configuration of a washing machine system of Embodiment 3 will be described with reference to FIG. 5. FIG. 5 is a block diagram showing the whole configuration of the washing machine system of this embodiment. The same elements as those of the washing machine system of Embodiment 2 in FIG. 4 are denoted by the same reference numerals, and the explanation will not be repeated.

In this system, the home network 2 of Embodiment 2 shown in FIG. 4 is not used, and the washing machine 1 is connected to the Internet 20 via an external communication interface 24.

The failure coping process in this configuration also is basically the same as the process represented by the flow chart in FIG. 2 or 3. This embodiment differs from Embodiment 1 in that the communication with the network terminal is performed only with the mobile phone 21 via the Internet 20.

Therefore, in the washing machine of this embodiment, when the occurrence of a failure in the operation condition is detected, the washing machine notifies the mobile phone 21 of this failure, and then waits for a communication for instructing a corrective action from the mobile phone 21. When not receiving a communication for instructing a corrective action from the mobile phone 21 until a predetermined time has elapsed from the start of waiting, the washing machine controls the operation to continue based on the contents that are preset in the operation control program. Consequently, the same effects as those of Embodiment 2 can be obtained.

### Industrial Applicability

The washing machine of the present invention allows users to cope with the occurrence of a failure in the operation action in the most satisfactory manner, and thus is useful for a washing machine system that can confirm and operate the operation condition using a network terminal.

### Description of Reference Numerals

- 1: Washing machine
- 2: Home network
- 3: Network terminal
- 4, 17: Home server
- 5: Washing function unit
- 10: Operation control unit
- 11: Detection unit
- 12, 15: Operation panel
- 13: Communication control unit
- 14: Home communication interface
- 16, 19: Control unit
- 18, 24: External communication interface
- 20: Internet
- 21: Mobile phone
- 22: Washing machine information server
- 23: Database

## Claims

1. A washing machine comprising:
a washing function unit that performs washing or drying of laundry;
a detection unit that includes various sensors for detecting an operation condition of the washing function unit;
a communication control unit that communicates with a network terminal via a communication network, wherein the network terminal has a transmitting and receiving function and is connected to the communication network; and
an operation control unit that controls an operation of the washing function unit to perform washing or drying in accordance with an operation control program,
the washing machine being configured to be capable of setting an operation control action performed by the operation control unit through communication from the network terminal,
wherein when detecting an occurrence of a failure in the operation condition of the washing function unit based on a detection signal from the detection unit during control of the operation, the operation control unit notifies the network terminal of the failure, and **characterised in that** the operation control unit then waits for a communication for instructing a corrective action for failure from the network terminal, and when a predetermined time has elapsed from start of waiting without receiving a communication for instructing the corrective action from the network terminal, the operation control unit controls the operation to continue an action based on contents that are preset in the operation control program.

2. The washing machine according to claim 1, wherein the operation control unit controls the operation to continue an action at the time of detecting the occurrence of the failure while the operation control unit waits for a communication from the network terminal.

3. The washing machine according to claim 1, wherein the operation control unit controls the operation to be stopped while the operation control unit waits for a communication from the network terminal.

4. The washing machine according to any one of claims 1 to 3, wherein when the operation control unit controls the operation to continue an action based on the contents that are preset in the operation control program, the operation control unit notifies the network terminal of the contents of the control.

5. The washing machine according to any one of claims 1 to 4, wherein water for washing can be selected from city water supply through a water supply valve or bathwater supply from a water supply pump, and
wherein when detecting a failure in the bathwater supply during control of the operation including the bathwater supply, the operation control unit notifies the network terminal of the failure, and then waits for a communication for instructing the corrective action from the network terminal, and when a predetermined time has elapsed from start of waiting without receiving a communication for instructing the corrective action from the network terminal, the operation control unit controls the operation to be resumed after switching the water supply to city water.

6. A washing machine system comprising:
the washing machine according to any one of claims 1 to 5, connected to a communication network, and
a network terminal that is connected to the communication network and can communicate with the washing machine via the communication network.

7. The washing machine system according to claim 6, wherein the communication network is a home wireless LAN, and the network terminal is a wireless personal digital assistant.

8. The washing machine system according to claim 6, wherein the communication network is configured by the Internet and a home network connected to the Internet, the washing machine is connected to the home network, and the network terminal is a mobile phone or a personal digital assistant connected to the home network via the Internet.

9. The washing machine system according to claim 6, wherein the communication network is configured by the Internet, the communication control unit of the washing machine is connected to the Internet via a communication interface, and the network terminal is a mobile phone or a personal digital assistant connected to the washing machine via the Internet and the communication interface.

## Patentansprüche

1. Waschmaschine, die Folgendes umfasst:
eine Waschfunktionseinheit, die das Waschen oder Trocknen von Wäsche durchführt;
eine Detektionseinheit, die verschiedenartige Sensoren zum Detektieren eines Betriebszustands der Waschfunktionseinheit enthält;
eine Kommunikationssteuereinheit, die über ein Kommunikationsnetz mit einem Netzendgerät kommuniziert, wobei das Netzendgerät eine sendende und eine empfangende Funktion hat und mit dem Kommunikationsnetz verbunden ist, und
eine Betriebssteuereinheit, die einen Betrieb der Waschfunktionseinheit steuert, um Waschen oder Trocknen in Übereinstimmung mit einem Betriebssteuerprogramm durchzuführen,
wobei die Waschmaschine so konfiguriert ist, dass sie einen Betriebssteuervorgang, der durch die Betriebssteuereinheit durchgeführt wird, durch Kommunikation von dem Netzendgerät einstellen kann,
wobei dann, wenn ein Auftreten eines Fehlers in dem Betriebszustand der Waschfunktionseinheit auf der Grundlage eines Detektionssignals von der Detektionseinheit während der Steuerung des Betriebs detektiert wird, die Betriebssteuereinheit das Netzendgerät über den Fehler benachrichtigt, und **dadurch gekennzeichnet, dass** sie dann auf eine Kommunikation von dem Netzendgerät wartet, um einen berichtigenden Vorgang für den Fehler anzuweisen, und dann, wenn eine vorgegebene Zeit seit dem Beginn des Wartens vergangen ist, ohne dass eine Kommunikation, um einen berichtigenden Vorgang anzuweisen, von dem Netzendgerät empfangen wurde, die Betriebssteuereinheit den Betrieb steuert, um einen Vorgang auf der Grundlage von Inhalten, die in dem Betriebssteuerprogramm voreingestellt sind, fortzusetzen.

2. Waschmaschine nach Anspruch 1, wobei die Betriebssteuereinheit den Betrieb steuert, um einen Vorgang zu der Zeit des Detektierens des Auftretens des Fehlers fortzusetzen, während die Betriebssteuereinheit auf eine Kommunikation von dem Netzendgerät wartet.

3. Waschmaschine nach Anspruch 1, wobei die Betriebssteuereinheit den Betrieb steuert, der angehalten werden soll, während die Betriebssteuereinheit auf eine Kommunikation von dem Netzendgerät wartet.

4. Waschmaschine nach einem der Ansprüche 1 bis 3, wobei dann, wenn die Betriebssteuereinheit den Betrieb steuert, um einen Vorgang auf der Grundlage der Inhalte, die in dem Betriebssteuerprogramm voreingestellt sind, fortzusetzen, die Betriebssteuereinheit das Netzendgerät über die Inhalte der Steuerung benachrichtigt.

5. Waschmaschine nach einem der Ansprüche 1 bis 4, wobei das Wasser zum Waschen aus einer Stadtwasserzufuhr durch ein Wasserzufuhrventil oder eine Badewasserzufuhr von einer Wasserzufuhrpumpe ausgewählt werden kann und
wobei dann, wenn ein Auftreten eines Fehlers in der Badewasserzufuhr während der Steuerung des Betriebs, der die Badewasserzufuhr umfasst, detektiert wird, die Betriebssteuereinheit das Netzendgerät über den Fehler benachrichtigt und dann auf eine Kommunikation von dem Netzendgerät wartet, um einen berichtigenden Vorgang anzuweisen, und dann, wenn eine vorgegebene Zeit seit dem Beginn des Wartens vergangen ist, ohne dass eine Kommunikation, um einen berichtigenden Vorgang anzuweisen, von dem Netzendgerät empfangen wurde, die Betriebssteuereinheit den Betrieb so steuert, dass der Betrieb nach dem Schalten der Wasserzufuhr auf Stadtwasser wiederaufgenommen wird.

6. Waschmaschinensystem, das Folgendes umfasst:
die Waschmaschine nach einem der Ansprüche 1 bis 5, die mit einem Kommunikationsnetz verbunden ist, und
ein Netzendgerät, das mit dem Kommunikationsnetz verbunden ist und über das Kommunikationsnetz mit der Waschmaschine kommunizieren kann.

7. Waschmaschinensystem nach Anspruch 6, wobei das Kommunikationsnetz ein drahtloses Heim-LAN ist und das Netzendgerät ein drahtloser persönlicher digitaler Assistent ist.

8. Waschmaschinensystem nach Anspruch 6, wobei das Kommunikationsnetz durch das Internet und ein Heimnetz, das mit dem Internet verbunden ist, konfiguriert ist, die Waschmaschine mit dem Heimnetz verbunden ist und das Netzendgerät ein Mobiltelefon oder ein persönlicher digitaler Assistent ist, die über das Internet mit dem Heimnetz verbunden sind.

9. Waschmaschinensystem nach Anspruch 6, wobei das Kommunikationsnetz durch das Internet konfiguriert ist, die Kommunikationssteuereinheit der Waschmaschine über eine Kommunikationsschnittstelle mit dem Internet verbunden ist und das Netzendgerät ein Mobiltelefon oder ein persönlicher digitaler Assistent ist, die über das Internet und die Kommunikationsschnittstelle mit der Waschmaschine verbunden sind.

## Revendications

1. Lave-linge comportant :
une unité de fonction de lavage qui exécute un lavage ou un séchage de linge ;
une unité de détection qui comporte divers capteurs pour détecter un état d'opération de l'unité de fonction de lavage ;
une unité de commande de communication qui communique avec un terminal de réseau par l'intermédiaire d'un réseau de communication, où le terminal de réseau comprend une fonction de transmission et de réception et est connecté au réseau de communication ; et
une unité de commande d'opération qui commande une opération de l'unité de fonction de lavage en vue d'exécuter un lavage ou un séchage en fonction d'un programme de commande d'opération,
le lave-linge étant conçu pour être apte à régler une action de commande d'opération exécutée par l'unité de commande d'opération par communication avec le terminal de réseau,
où lorsqu'une défaillance est détectée dans l'état d'opération de l'unité de fonction de lavage sur la base d'un signal de détection provenant de l'unité de détection, pendant la commande de l'opération, l'unité de commande d'opération notifie la défaillance au terminal de réseau, et **caractérisé en ce que** l'unité de commande d'opération attend ensuite une communication du terminal de réseau l'instruisant d'une action pour contrer le problème, et lorsqu'un temps prédéterminé s'est écoulé depuis le début de l'attente sans qu'elle ne reçoive de communication du terminal de réseau l'instruisant d'une action pour contrer le problème, l'unité de commande d'opération commande l'opération de manière à poursuivre une action sur la base de contenus préréglés dans le programme de commande d'opération.

2. Lave-linge selon la revendication 1, où à l'instant de la détection de la défaillance, l'unité de commande d'opération commande l'opération de manière à poursuivre une action pendant que l'unité de commande d'opération attend la communication du terminal de réseau.

3. Lave-linge selon la revendication 1, où l'unité de commande d'opération commande l'arrêt de l'opération pendant que l'unité de commande d'opération attend la communication du terminal de réseau.

4. Lave-linge selon l'une quelconque des revendications 1 à 3, où lorsque l'unité de commande d'opération commande l'opération de manière à poursuivre une action sur la base de contenus préréglés dans le programme de commande d'opération, l'unité de commande d'opération notifie le contenu de la commande au terminal de réseau.

5. Lave-linge selon l'une quelconque des revendications 1 à 4, où l'eau de lavage peut être sélectionnée parmi une alimentation en eau municipale via une vanne d'alimentation en eau ou une alimentation en eau de bain provenant d'une pompe d'alimentation en eau, et
où lors de la détection d'une défaillance de l'alimentation en eau de bain, pendant la commande de l'opération utilisant l'alimentation en eau de bain, l'unité de commande d'opération notifie la défaillance au terminal de réseau, puis attend une communication du terminal de réseau l'instruisant d'une action pour contrer le problème, et lorsqu'un temps prédéterminé s'est écoulé depuis le début de l'attente sans qu'elle ne reçoive de communication du terminal de réseau l'instruisant d'une action pour contrer le problème, l'unité de commande d'opération ordonne la poursuite de l'opération après avoir basculé l'alimentation en eau vers l'eau municipale.

6. Système de lave-linge comportant :
le lave-linge selon l'une quelconque des revendications 1 à 5, connecté à un réseau de communication, et
un terminal de réseau qui est connecté au réseau de communication et peut communiquer avec le lave-linge via le réseau de communication.

7. Système de lave-linge selon la revendication 6, où le réseau de communication est un réseau local sans fil domestique, et le terminal de réseau est un assistant numérique personnel sans fil.

8. Système de lave-linge selon la revendication 6, où le réseau de communication se compose d'internet et d'un réseau domestique connecté à internet, le lave-linge est connecté au réseau domestique et le terminal de réseau est un téléphone portable ou un assistant numérique personnel connecté au réseau domestique via internet.

9. Système de lave-linge selon la revendication 6, où le réseau de communication se compose d'internet, l'unité de commande de communication du lave-linge est connectée à internet via un interface de communication, et le terminal de réseau est un téléphone portable ou un assistant numérique personnel connecté au lave-linge via internet et l'interface de communication.
